# EUROPEAN PATENT SPECIFICATION

(11) **EP 0 578 343 B1**
(45) Date of publication and mention of the grant of the patent: **20.08.1997**
(21) Application number: 93250149.7
(22) Date of filing: 02.06.1993
(51) Int. Cl.: B08B 9/02

(54) **High pressure water jet cleaner and coating applicator**
Hochdruckwasserstrahlreiniger und Vorrichtung zum Anbringen von Beschichtungen
Dispositif de nettoyage à haute pression avec un jet d'eau et dispositif pour appliquer des couches

(30) Priority: 10.07.1992 US 911759
(43) Date of publication of application: 12.01.1994
(73) Proprietor: CRC-Evans Rehabilitation Systems, Inc., Houston Texas 77047 (US)
(72) Inventor: Taylor, Sidney A., Houston, Texas 77035 (US); Stenzel, Andrzej, Houston, Tx. 77083 (US); Rogala, Stanley J., Katy, Texas 77450 (US)
(74) Representative: UEXKÜLL & STOLBERG

(56) References cited:
- EP-A- 0 408 883
- EP-A- 0 478 922
- US-A- 4 552 594

## Description

### TECHNICAL FIELD OF THE INVENTION

This invention relates to a device for treating the exterior surface of pipe in a pipeline, including cleaning, surface preparation and coating.

### BACKGROUND OF THE INVENTION

A pipeline typically has an outer coating to protect the pipeline from corrosion and other detrimental effects, particularly when the pipeline is buried underground. This coating degrades with time, and, if the pipeline itself is to be prevented from sustaining further permanent damage, the pipeline must be dug up, the old coating removed, the surface of the pipe conditioned and a new coat of protective material applied to the pipeline.

When initially building a pipeline, the individual pipe sections are typically coated prior to shipment to the final location, where they are welded together to form the pipeline. By coating the pipe sections prior to shipment, it is possible that the coating will be damaged in shipment. Also, the welding of the pipe sections together destroys the coating at the welded ends. Coating damage due to shipment and welding must be repaired on a spot basis as the pipeline is constructed. Because of the excellent corrosion protection, impact and adhesive properties, it would be advantageous to coat the entire pipeline with a plural component polyurethane material at the construction site. However, no technique has been developed to date to do so economically and at the production rates required.

In a typical pipeline rehabilitation operation, the pipeline will be uncovered, and a lifting mechanism, such as a crane, will be used to lift the exposed portion of the pipeline out of the ditch and rest the exposed pipeline on skids to provide access to the entire outer surface of the pipeline in the portion between the skids. The pipe must then be cleaned, the outer surface of the pipeline prepared to receive a new protective coat, and the pipeline then recoated.

Initially, manual labor was required to remove the old coating with hand tools such as scrapers. This technique is obviously time consuming and quite expensive. Various attempts have been made to provide more automation to the cleaning procedure, including U.S. Patent No. 4,552,594 and U.S. Patent No. 4,677,998. These patents disclose the use of high pressure water jets which are moved in a zigzag path along the pipe surface to be cleaned to slough off the coating. While devices of this type have been an improvement over manual cleaning, there still exists a need in the industry for enhanced performance in the cleaning and recoating operation.

European Patent Application No. 408,883 discloses a high pressure water jet cleaner and coating applicator. The apparatus employs a centering assembly with pivoting arms which can pivot between an operating position and an installation/removal position to allow the unit to be removed from a pipeline. Arcuate rings are mounted on the arms. Spray nozzles are mounted on the arcuate rings for reciprocating arcuate motion along the rings to treat the pipeline. The nozzles can be used to clean the pipeline and prepare the outer surface of the pipeline with high pressure water jets by entraining abrasives. The nozzles can also be used to apply a coating, preferably a polyurethane coating, to the pipeline.

An object of the present invention is to provide oscillation of nozzles mounted on brackets by oscillating the brackets themselves. The brackets are mounted on wings. The wings have a slot permitting the nozzle to discharge against the outer surface of the pipeline being treated while the bracket covers the portion of the slot not occupied by the nozzle to contain the materials within the device. Two brackets can be mounted on each wing with each bracket being oscillated a different arcuate distance. This permits more nozzles to be mounted on one of the brackets than the other. This us useful when treating pipeline where the lower portion of the pipeline may need extra treatment as compared to the upper portion of the pipeline.

### SUMMARY OF THE INVENTION

In accordance with the present invention, an apparatus is provided for treating a pipeline as claimed in claim 1.

### BRIEF DESCRIPTION OF THE DRAWINGS

For a more complete understanding of the present invention and for further advantages thereof, reference is now made to the following Detailed Description taken in conjunction with the accompanying drawings, in which:
FIGURE 1 is a perspective view of a pipeline treating apparatus of the present invention;
FIGURE 2 is a back view of the apparatus of FIGURE 1;
FIGURE 3 is a side view of the apparatus of FIGURE 1;
FIGURE 4 is a front view of the apparatus of FIGURE 1;
FIGURE 5 is a top view of the apparatus of FIGURE 1;
FIGURE 6 is a cross-sectional view of the apparatus;
FIGURE 7 is an illustrative view of the drive train of the apparatus;
FIGURE 8 is an illustrative view of the chain drive of the apparatus;
FIGURE 9 is a side view of a carriage used in the apparatus;
FIGURE 10 is a front view of the carriage of FIGURE 9;
FIGURE 11 is a side view of a carriage used in the apparatus;
FIGURE 12 is a front view of the carriage of FIGURE 11;
FIGURE 13 is a top view of a bracket used in the apparatus;
FIGURE 14 is a side view of a bracket of FIGURE 13;
FIGURE 15 is a top view of a clamp used in the apparatus;
FIGURE 16 is a side view of the clamp of FIGURE 15;
FIGURE 17 is a cross-sectional view of the apparatus;
FIGURES 18A, B and C illustrate various nozzle configurations on the apparatus.

### DETAILED DESCRIPTION

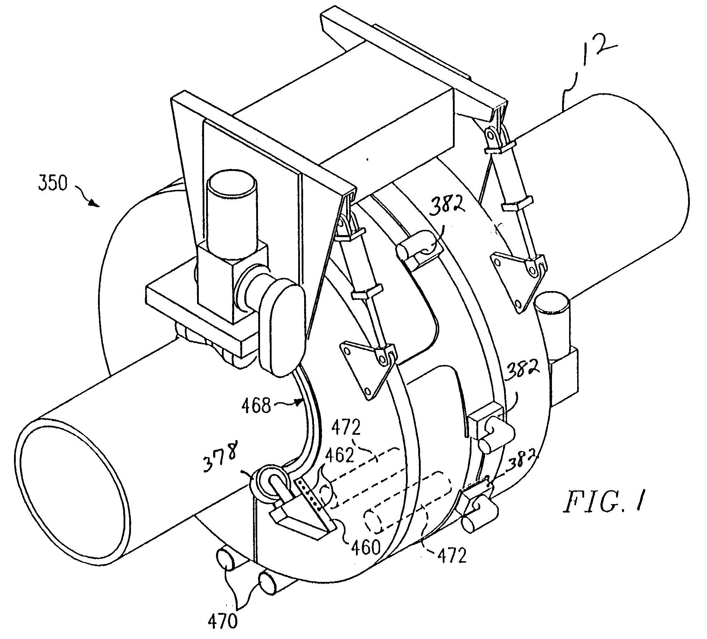

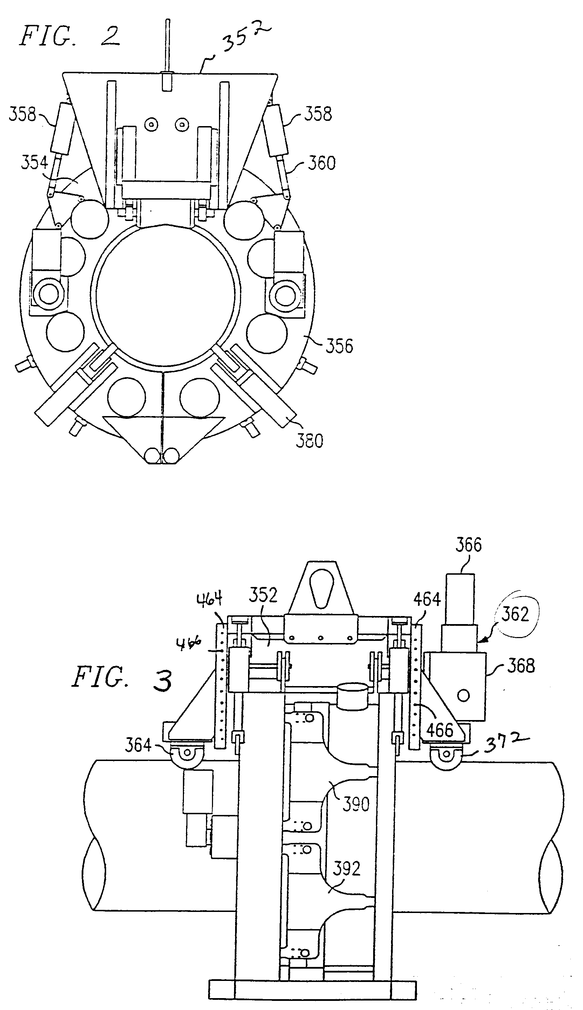

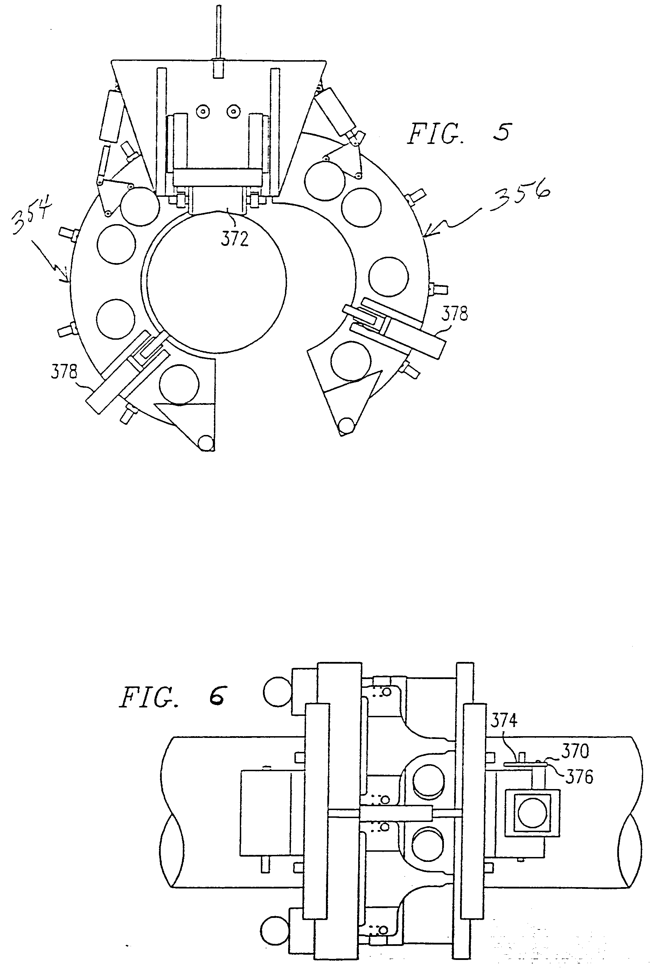

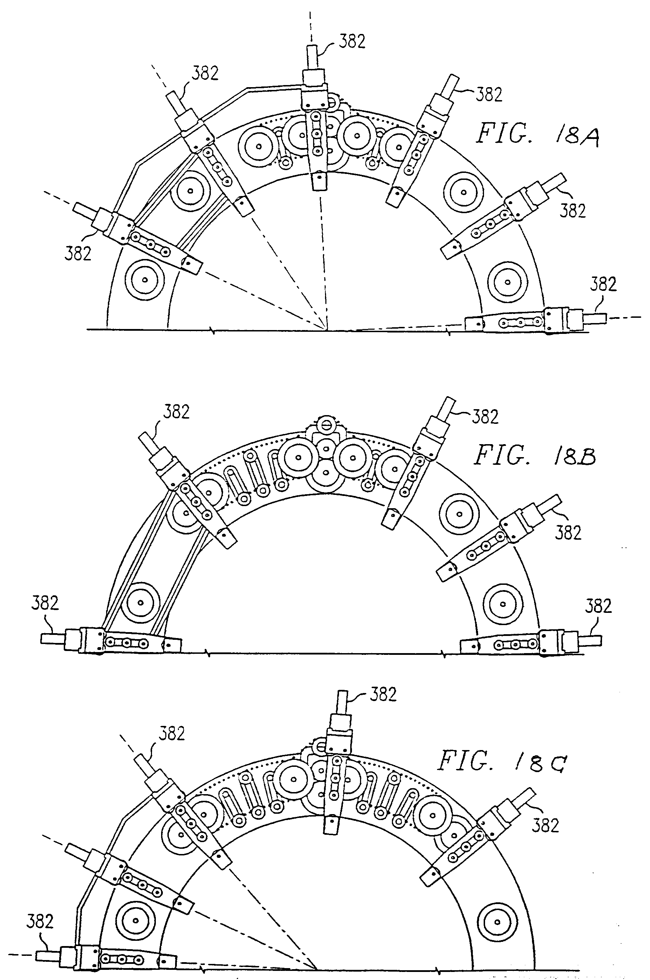

With reference now to the accompanying drawings, wherein like reference numerals designate like or similar parts throughout the several views, an automated pipeline treating apparatus 350 forming a first embodiment of the invention is illustrated in FIGURES 1-18. The apparatus 350 is used to clean and/or coat a pipeline 12, which can be either a new pipeline or a previously coated pipeline in need of rehabilitation. Typically, the pipeline to be rehabilitated will be a pipeline which has just been uncovered and raised out of the ditch with the original coating on the pipeline having degraded to a condition that is no longer serviceable.

In various modes of the apparatus 350, the apparatus can be used to clean any old coating off the pipeline and condition the outer surface of the pipeline itself for a new coating. In another mode, the apparatus 350 can be used to spray on the new coating once the pipeline surface has been prepared.

In the cleaning and surface preparation mode, the apparatus 350 is used with a sled unit. The sled unit is commonly mounted on tracks which is pulled parallel to the pipeline being treated and the weight of the sled unit thus has no effect whatsoever on the pipelines In contrast, the apparatus 350 is supported on the pipeline itself for movement along the axis 20 of the pipe. The weight of the apparatus 350 will be such as to be readily carried by the pipeline without damage. The weight of this unit does not have to be supported by a side boom or other lifting device during operation.

The apparatus 350 can be used to clean with high speed water jets in the nozzles as described hereafter with pressure ranges from 680 to 1020 bar to accelerate the individual abrasive particles, typically sand, to greatly increase the momentum of the particle and allow it to more efficiently remove contaminants on the pipeline surface and obtain the needed surface profile. The high speed water jet attacks the interface that bonds the coating or contaminant to the pipe itself and removes all loosely bonded material. In addition, the water will dissolve and remove any corrosion causing salts on the pipeline. The erosive action of the abrasive is used to remove the tightly bonded material such as rust and primer and provide the desired surface profile for receiving a new coating. The sled unit is designed to be towed as a separate vehicle. The sled unit mounts the control panel for the various functions of the apparatus, and includes a computer to maintain the desired relation between speed of the units along the pipeline and the speed of oscillation of the nozzles. The sled unit also contains high pressure pump units used to provide the high pressure water at the nozzles. One, two or three pumps can be run in tandem depending on the size of the pipeline to be cleaned and the degree of cleaning desired. Using less than the total number of pumps minimizes water consumption, fuel costs and maintenance when the full capacity is not required. Also, in the event one of the pump units goes off line, another unit can be brought on line quickly to replace it. A quintuplex positive displacement pump with stainless steel fluid and pressure lubricated power ends is a satisfactory pump. Such a pump can be rated at 680 bar (10,000 psi) at 129.8 ℓt (34.3 gallons) per minute, for example. The sled unit also contains a compressor to operate the cylinders 358, a generator for electrical power for the motor and to power the air compressor and other controls. Also, the sled unit mounts containers of the abrasive.

The apparatus 10 can be used to apply a new coating to the pipeline as well. Instead of nozzles to apply abrasives and high pressure water jets, the nozzles can be used to spray a polyurethane coating on to the pipeline. A polyurethane coating of the type that can be used for such coating is sold under the trademark and identification PROTOGOL UT 32 10 and is manufactured by T.I.B.-Chemie, a company located in Mannheim, West Germany. This polyurethane material is a two part material, one part being a resin and the other an isocyanate. When the two parts are mixed in a 4 to 1 ratio of resin to isocyanate, the material sets up in a hard state within thirty seconds of mixing. The apparatus 10 thus is an ideal device to apply such a spray in a continuous manner along the pipeline, providing, with the nozzle overlap, complete coating of the pipeline to the desired coating thickness as the apparatus moves along the pipeline. After the polyurethane has been applied, solvent will be driven through the nozzles and supply passages to prevent the polyurethane from hardening and ruining the apparatus.

The pipeline treating apparatus 350 of the present invention is illustrated in FIGURES 1-18. The apparatus 350 is used for treating the exterior surface of pipeline 12 as will be described hereinafter.

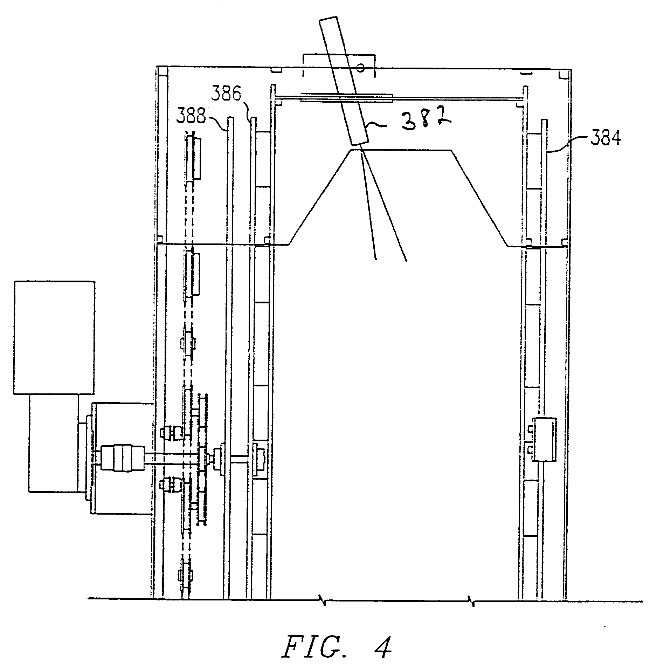

The apparatus includes a main frame 352 which is set atop the pipeline 12 and pivotally mounts a wing 354 and a wing 356 which enclose a length of the pipeline in the closed position. As can best be seen in FIGURES 1-5, a pair of air cylinders 358 are pivotally mounted on each side of the main frame 352 and the pistons 360 thereof are pivotally secured to the adjacent wing. Retraction of the pistons 360 into the air cylinders will cause the wings to pivot away from the pipeline (as shown by wing 356 in FIGURE 4), allowing the apparatus to be removed from the pipeline. Installation is performed by pressurizing the cylinder to pivot the wings into the closed position, as seen in FIGURES 1-3 for treatment of the pipeline. An auxiliary mechanical clamp, not shown, can be used to secure the wings in the closed position in lieu of or in supplement to maintaining pressure in the cylinders 358 to hold the wings in the closed position.

Mounted at the front of the main frame 352 is a drive assembly 362. Mounted at the back of the main frame 352 is an idler roller 364. The drive assembly 362 includes a motor which drives a gear reduction unit 368 with an output at gear 370. A driven roller 372 is mounted on the assembly and engages the top of the pipeline. A gear 374 is secured at one end of the roller and a chain 376 interconnects the gears 370 and 374 to transmit rotation from the motor to the drive roller 372. In this manner, the apparatus can be moved along the pipeline as desired.

As can be seen in FIGURES 1-5, each wing also mounts a front idler wheel 378 and a back idler wheel 380 which engage the surface of the pipeline when the wings are in the closed position. In the closed position, wheels 378 and 380 and rollers 364 and 372 are about 120° apart about the circumference of the pipeline.

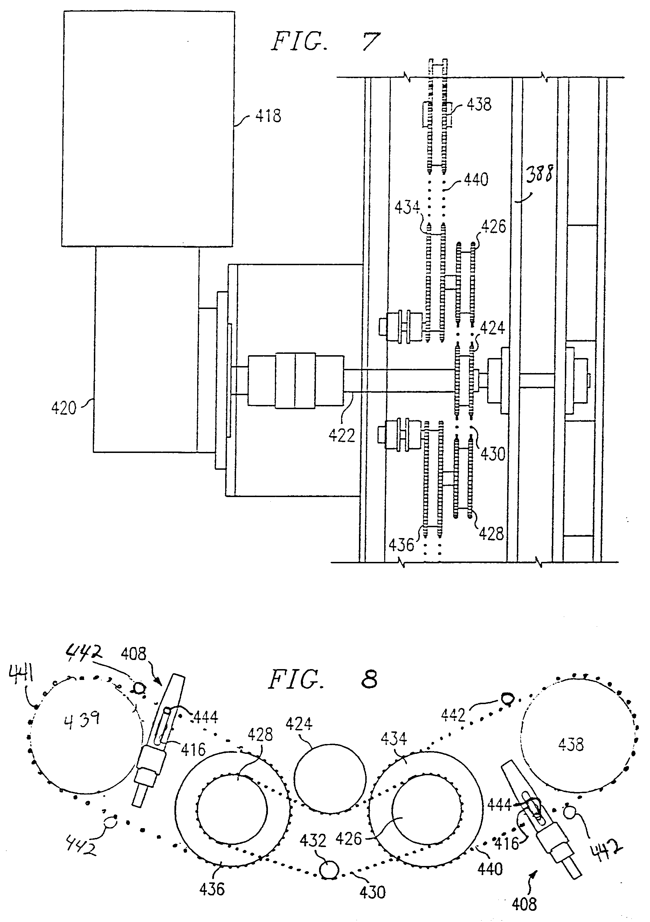

With reference now to FIGURE 6, certain of the internal components of the apparatus will be described. Each of the wings mounts four separate nozzles 382 to perform the operation on the pipeline. As will be described, each nozzle is oscillated almost 45° in an arc lying in a plane perpendicular to the center axis of the pipeline so that every bit of the outer surface of the pipeline will be treated. The nozzles discharge against the outer surface of the pipeline within a blast chamber 383 defined by the apparatus.

Each wing mounts a semi-circular front ring 384 and first and second semi-circular back rings 386 and 388. Each of these rings is securely fastened to the wing. A pair of brackets 390 and 392 are mounted on the rings for arcuate motion in a plane perpendicular the center line of the pipeline and each of these brackets mounts two of the nozzles 382.

With reference to FIGURES 13 and 14, each bracket 390 and 392 can be seen to include a central section 394 with a forward extending arm 396 and side portions 398 and 400 extending at an angle from the central section 394. At the forward end of the arm 396 is mounted an idle carriage 402 as best illustrated in FIGURES 11 and 12. The idle carriage has a pair of notched outer rollers 404 which engage the outer rim of the front ring 384. The carriage also has a single notched inner roller 406 which engages the inner rim of the ring 384. Thus, the idle carriage, and therefore the arm 396, is restrained from radial movement along a radial line extending from the center line of the pipeline, but is permitted to move in an arc at a constant radius from the center line guided along the inner and outer rims of the front ring 384.

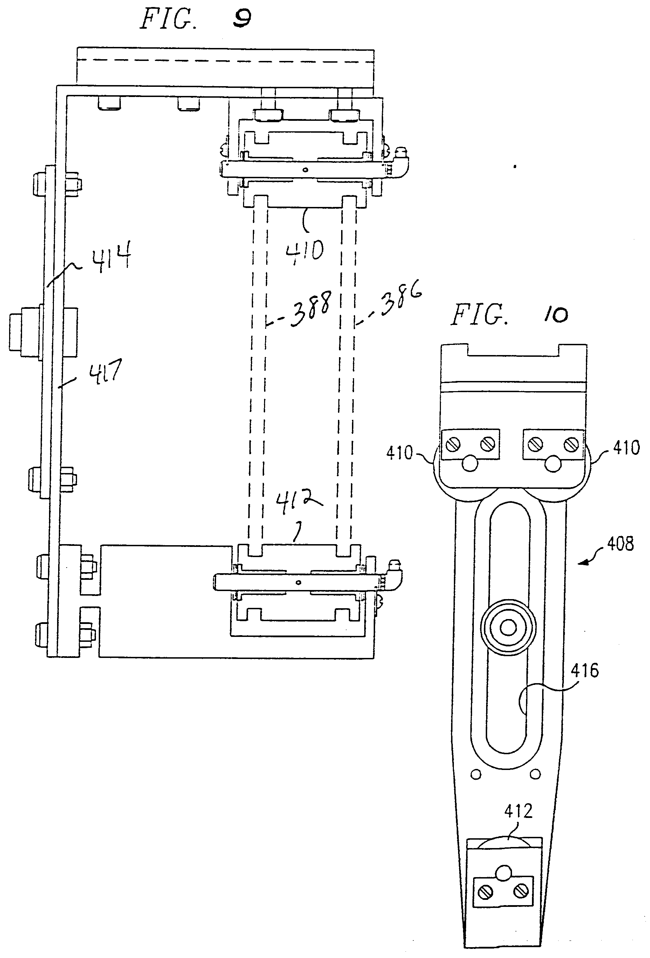

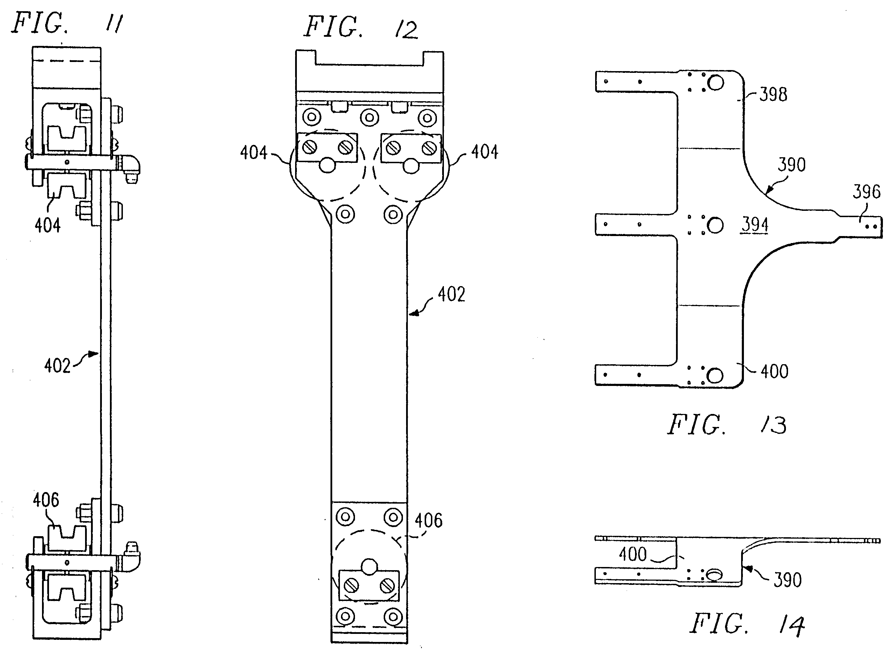

Mounted to each of the side portions 398 and 400 of the brackets is a drive carriage 408 as illustrated in FIGURES 9 and 10. The drive carriage 408 mounts a pair of double notched outer rollers 410 which engage the outer rims of the rings 386 and 388. A single double notched inner roller 412 engages the inner rim of the rings 386 and 388. Again, the drive carriages 408 and side portions 398 and 400 are prevented from movement in a radial direction along a radial line from the center line of the pipeline by the engagement between the rollers and the rings. However, the carriages and side portions can move in an arcuate direction at a constant radius from the center line of the pipeline guided by the inner and outer rims of the rings 386, 388. Also forming part of each drive carriage 408 is a member 414 which defines an elongated guide slot 416 to engage the chain drive described hereinafter.

A quarter section backing plate 417 is bolted between each pair of drive carriages 408. The backing plate provides support to the carriages 408 and brackets as they oscillate.

Each wing mounts a drive motor 418 on the back side thereof (see FIGUREs 6, 7 and 17). The drive motor is connected to a gear reduction unit 420 and the output of the unit 420 is provided through a drive shaft 422 ending in a gear 424. With reference now to FIGURES 6 and 7, the gear 424 drives gears 426 and 428 through a drive chain 430 tensioned by a tension idler 432. The gears 426 and 428, and tension idler 432, are each mounted for rotation on the back ring 388.

A gear 434 is mounted to gear 426 for joint rotation. Similarly, a gear 436 is attached for rotation with the gear 428. A gear 438 is spaced along the ring from gear 434 and is secured to the ring. A chain 440 extends about the gears 434 and 438 and is tensioned by chain tensioners 442. One link of the chain 440 is provided with a pin 444 which extends rearward from the chain and into the elongated guide slot 416 in one of the two drive carriages 408 mounted on the bracket 390. As the motor drives the gears and chain 440 in a constant unidirectional motion, the pin 444 will cause the drive carriage 408 and nozzles mounted thereon to be oscillated in an arcuate manner determined by the length of the chain 440. The position of gear 438 can be adjusted on the ring 388, and the chain 440 lengthened or shortened accordingly to change the degree of oscillation of the drive carriage, and therefore the nozzles. Similarly, a gear 439 is spaced along the ring from gear 436 and a chain 441 is tensioned about gears 436 and 439 by tensioners 442. One of the links of the chain also has a pin 44 extending rearward to engage the guide slot 416 in one of the drive carriages 408 on bracket 392.

The arcuate motion of each of the brackets 390 and 392 can be tailored for the number of nozzles mounted on the bracket. For example, if two nozzles are mounted on the bracket, one each on a side portion 398 or 400 as seen in FIGURE 1, the arcuate motion of the bracket will be desired to about 45°. This will insure that the entire quadrant of the pipeline surface covered by the bracket will be treated. If three nozzles are mounted on the bracket, the chain 440 driving the bracket will be shortened and the gear 438 will be repositioned so that the arcuate motion is about 30°.

It should be noted that each driving motor, driving two brackets 390 and 392, can drive those brackets with different arcuate motions simultaneously. For example, pipe is often rustier on its bottom surface than its top surface. It may therefore be important to provide a heavier cleaning effort on the lower portion of the pipeline than the upper portion in order to maximize the speed of movement of the cleaning apparatus. As such, three nozzles could be put on the brackets 392 on the lower quadrants of the pipeline surface and two nozzles on the brackets 390 on the upper quadrants of the pipeline surface with the respective chains 440 and 441 and gears 438 and 439 positioned so that the upper quadrant is reciprocated 45° and the lower quadrant is reciprocated 30° for the same motion of the drive motor and drive gear 424. Thus, the present design provides great flexibility in tailoring the nozzle distribution for a particular pipeline application. For example, 4 to 12 nozzles, or more, could be used on the apparatus.

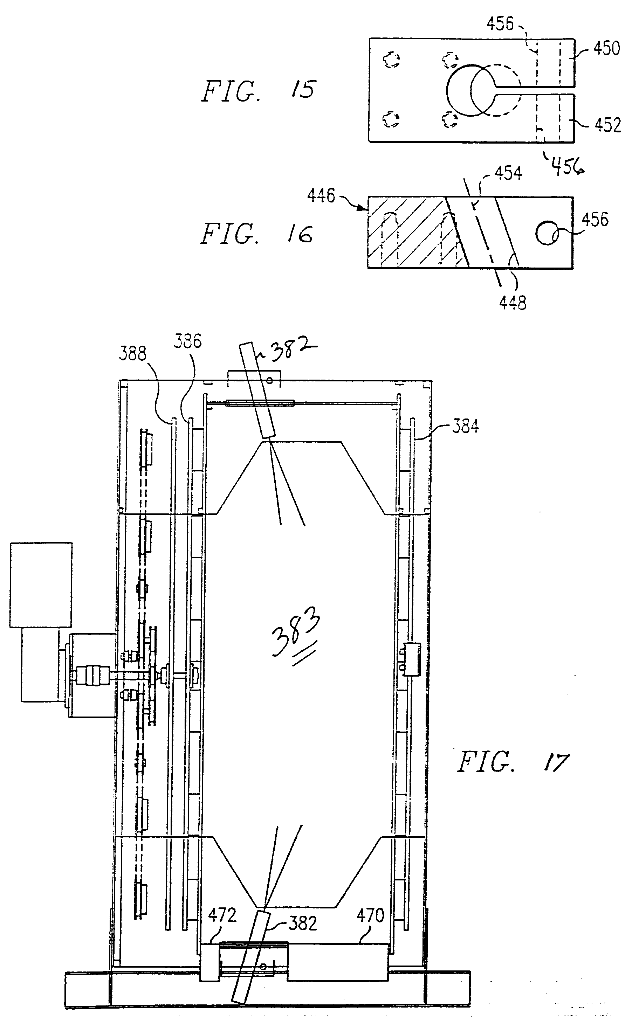

With reference now to FIGURES 15 and 16, the individual nozzles 382 are held in position on the brackets by a nozzle clamp bracket 446. The bracket has an aperture 448 defined between two clamp arms 450 and 452 to receive the nozzle. The center line 454 of the aperture is preferred to be at an angle from perpendicular to the outer surface of the pipeline, typically 15°, which is believed to enhance the action of the nozzle discharge on the outer surface of the pipeline. The nozzle position relative to the outer surface of the pipeline can be varied by moving the nozzle along the center line of the aperture. When the desired position is reached, a bolt is passed through mating holes 456 in each of the arms and the arms are clamped together to clamp the nozzle to the bracket 446.

As seen in FIGURES 1-5, the pipeline treating apparatus 350 can be quickly adjusted for use on a different size pipeline within a predetermined range of sizes, for example, between 51-91 cm (20-36 inches) pipeline diameter. This is accomplished through the mounts of the drive assembly 362, roller 364 and the idler wheels 378 and 380. As can best be seen in FIGURE 39, each idler wheel is mounted on a bracket 460 which has a plurality of holes 462 spaced at 2.5 cm (one inch) intervals therealong which lie on a radial line from the center line of the pipeline. The idler wheels can simply be reattached at different holes 462 along the bracket 460 to adjust the radial position of the idler wheel. The drive assembly 362 and roller 364 are similarly mounted on brackets 464 with a plurality of holes 466 lying on a radial line from the center line of the pipeline to permit the drive assembly to be radially moved in a similar manner.

In addition to the movement of the drive assembly and idler wheels, the annular brushes 468 at each end of the apparatus will be changed to accommodate the diameter of the pipeline. The brushes 468 are intended to isolate the blast chamber 383 defined by the apparatus about the outside of the pipeline being treated from the exterior environment.

In one application, pipeline treating apparatus 350 is designed for cleaning the exterior of a pipeline with small steel particles exhausted from the nozzles by air at a pressure between 100 and 150 psi. The particles, and debris removed from the exterior of the pipeline, will fall by gravity near the bottom of the apparatus 350. Manifolds 470 and 472 are provided at the bottom of the apparatus and are connected to vacuum piping to draw the debris and material out of the apparatus for separation, treatment and disposal.

Although one embodiment of the invention has been illustrated in the accompanying drawings and described in the foregoing Detailed Description, it will be understood that the invention is not limited to the embodiment disclosed, but is capable of numerous rearrangements, modifications and substitutions of parts and elements without departing from the scope of the invention as defined in the claims.

## Claims

1. A pipeline treating apparatus (350) for treating pipeline (12) including a main frame (352), a first wing (354) pivotally mounted to the main frame at one end on a first side of the main frame, the first wing (354) extending about substantially one-half the circumference of the pipeline and a second wing (356) pivotally mounted on the main frame at one end on a second side of the main frame (352), the second wing (356) extending about substantially the other half of the circumference of the pipeline (12),
**characterized** in that the apparatus further comprises at least one bracket (390, 392) mounted on each of said wings (354, 356) for arcuate motion along the wing, a nozzle (382) mounted on each of said brackets (390, 392) facing the exterior surface of the pipeline and means (418, 424, 434, 444) mounted on each wing for oscillating the bracket (390, 392) on that wing a predetermined arcuate distance about the circumference of the pipeline (12) to treat the outer surface of the pipeline.

2. The pipeline treating apparatus of Claim 1 characterized in that the main frame (352) has a drive assembly (362) for moving the main frame along the pipeline;
the first wing (354) is pivotally mounted on the main frame (352) for pivotal motion between a first position covering a portion of the outer surface of the pipeline and a second position spaced from the outer surface of the pipeline;
the second wing (356) is pivotally mounted to the main frame (352) for pivotal motion between a first position covering a portion of the outer surface of the pipeline and a second position spaced from the outer surface of the pipeline, the main frame and first and second wings defining an annular blast chamber (383) about a length of the outer surface of the pipeline when the wings are in the first position;
each wing (354, 356) has a front ring (384) and a back ring (386, 388) and at least one bracket (390, 392) mounted between said rings for arcuate motion in a plane perpendicular to the center line of the pipeline, at least one nozzle (382) mounted on the bracket;
a drive mechanism (418) is mounted on each wing for oscillating the bracket (390, 392) and nozzle (382) a predetermined arcuate distance about the circumference of the pipeline.

3. The pipeline treating apparatus of Claim 1 characterized by a nozzle clamp bracket (446) mounted on the bracket (390, 392), the nozzle clamp bracket defining an aperture (448) to receive the nozzle (382) between a first clamp arm (450) and a second damp arm (452), a force application device for deflecting the clamp arms to clamp the nozzle within the aperture, the center line (454) of the aperture being oriented to direct the nozzle discharge at a desired angle relative to the outer surface of the pipeline, the nozzle being adjustable along the center line by positioning the nozzle as desired and clamping the nozzle in place therein.

4. The pipeline treating apparatus of Claim 2 characterized by the drive mechanism (418) having a drive roller (372) engaging the outer surface of the pipeline and at least one idler wheel (378, 380) for engaging the outer surface of the pipeline, the drive assembly and idler wheel each being mounted on a bracket (460, 464) with structure for mounting the drive assembly and idler wheel at various locations along a radial line extending from the center line of the pipeline to permit the apparatus to be used with a range of pipeline diameters.

5. The pipeline treating apparatus of Claim 1 characterized in that the oscillating means has a motor (418) rotating a drive gear (424), a chain drive having a first gear (434, 436), a second gear (438, 439), and a chain (440, 441) engaging said first and second gears, the drive gear rotating said first gear, the chain having a link with a pin (444) extending therefrom, the pin engaged with said bracket, rotation of the drive gear inducing rotation in said first and second gears and movement of the chain in a continuous direction, the pin causing the bracket to oscillate.

6. The pipeline treating apparatus of Claim 5 characterized by a second bracket mounted on the wing, the second bracket being oscillated by the drive motor (418).

7. The pipeline treating apparatus of Claim 1 characterized in that the first bracket is mounting two nozzles (382) and the second bracket is mounting three nozzles (382).

## Patentansprüche

1. Pipeline-Behandlungsvorrichtung (350) zum Behandeln einer Pipeline (12), mit einem Hauptrahmen (352), einem ersten Flügel (354), der schwenkbar an dem Hauptrahmen an einem Ende an einer ersten Seite des Hauptrahmens montiert ist, wobei sich der erste Flügel (354) im wesentlichen um eine Hälfte des Umfangs der Pipeline erstreckt, und einem zweiten Flügel (356), der schwenkbar an dem Hauptrahmen an einem Ende an einer zweiten Seite des Hauptrahmens (352) montiert ist, wobei sich der zweite Flügel (356) im wesentlichen um die andere Hälfte des Umfang der Pipeline (12) erstreckt,
**dadurch gekennzeichnet,** daß die Vorrichtung außerdem zumindest einen Haltearm (390, 392), der an jedem der Flügel (354, 356) für eine bogenförmige Bewegung entlang des Flügels angebracht ist, eine Düse (382), die an jedem der Haltearme (390, 392) gegenüberliegend zur Außenfläche der Pipeline angebracht ist, und Einrichtungen (418, 424, 434, 444) aufweist, die an jedem Flügel angebracht sind, um den Haltearm (390, 392) an diesem Flügel entlang einer bestimmten bogenförmigen Strecke um den Umfang der Pipeline (12) hin- und herzubewegen, um die Außenfläche der Pipeline zu behandeln.

2. Pipeline-Behandlungsvorrichtung nach Anspruch 1, **dadurch gekennzeichnet,** daß der Hauptrahmen (352) eine Antriebsanordnung (362) aufweist, um den Hauptrahmen entlang der Pipeline zu bewegen;
der erste Flügel (354) für eine Schwenkbewegung zwischen einer ersten Position, in der ein Bereich der Außenfläche der Pipeline bedeckt ist, und einer zweiten Position, die von der Außenfläche der Pipeline beabstandet ist, schwenkbar an dem Hauptrahmen (352) montiert ist;
der zweite Flügel (356) für eine Schwenkbewegung zwischen einer ersten Position, in der ein Bereich der Außenfläche der Pipeline bedeckt ist, und einer zweiten Position, die von der Außenfläche der Pipeline beabstandet ist, schwenkbar an dem Hauptrahmen (352) montiert ist, wobei der Hauptrahmen und der erste und der zweite Flügel über einer Länge der Außenfläche der Pipeline eine ringförmige Gebläsekammer (383) bilden, wenn sich die Flügel in ihrer ersten Position befinden;
jeder Flügel (354, 356) einen vorderen Ring (384) und einen hinteren Ring (386, 388) und zumindest einen Haltearm (390, 392) enthält, der zwischen den Ringen für eine bogenförmige Bewegung in einer Ebene montiert ist, die senkrecht zu der Mittellinie der Pipeline verläuft, wobei an dem Haltearm zumindest eine Düse (382) angebracht ist;
an jedem Flügel ein Antriebsmechanismus (418) angebracht ist, um den Haltearm (390, 392) und die Düse (382) entlang einer bestimmten bogenförmigen Strecke um den Umfang der Pipeline hin- und herzubewegen.

3. Pipeline-Behandlungsvorrichtung nach Anspruch 1, **gekennzeichnet durch** eine Düsenklemmhalterung (446), die an dem Haltearm (390, 392) angebracht ist, wobei durch die Düsenklemmhalterung eine Öffnung (448) gebildet ist, um die Düse (382) zwischen einem ersten Klemmenarm (450) und einem zweiten Klemmenarm (452) aufzunehmen, eine Einrichtung zum Aufbringen einer Kraft, um die Klemmenarme zu biegen, um die Düse in der Öffnung einzuklemmen, wobei die Mittellinie (454) der Öffnung ausgerichtet ist, um den Düsenausfluß mit einem gewünschten Winkel relativ zu der Außenfläche der Pipeline zu lenken, wobei die Düse entlang der Mittellinie verstellbar ist, indem die Düse wunschgemäß positioniert und die Düse darin in ihrer Position eingeklemmt wird.

4. Pipeline-Behandlungsvorrichtung nach Anspruch 2, **dadurch gekennzeichnet,** daß der Antriebsmechanismus (418) eine Antriebswalze (372), die an der Außenfläche der Pipeline anliegt, und zumindest ein Führungsrad (378, 380) hat, um an der Außenfläche der Pipeline anzuliegen, wobei die Antriebsanordnung und das Führungsrad jeweils an einem Haltearm (460, 464) mit einer Konstruktion angebracht sind, um die Antriebsanordnung und das Führungsrad an verschiedenen Stellen entlang einer radial verlaufenden Linie anzubringen, die sich von der Mittellinie der Pipeline erstreckt, um eine Verwendung der Vorrichtung für verschiedene Pipeline-Durchmesser zu ermöglichen.

5. Pipeline-Behandlungsvorrichtung nach Anspruch 1, **dadurch gekennzeichnet,** daß die Hin- und Herbewegungseinrichtung einen Motor (418), der ein Antriebszahnrad (424) dreht, und einen Kettenantrieb mit einem ersten Zahnrad (434, 436), einem zweiten Zahnrad (438, 439) und einer Kette (440, 441) hat, die mit dem ersten und dem zweiten Zahnrad eingreift, das Antriebszahnrad das erste Zahnrad dreht, die Kette eine Verbindung mit einem sich davon erstreckenden Stift (444) hat, der Stift mit dem Haltearm eingreift, eine Drehung des Antriebszahnrads eine Drehung des ersten und des zweiten Zahnrads und eine Bewegung der Kette in eine gleichbleibende Richtung bewirkt, wobei durch den Stift eine Hin- und Herbewegung des Haltearms bewirkt wird.

6. Pipeline-Behandlungsvorrichtung nach Anspruch 5, **gekennzeichnet durch** einen zweiten Haltearm, der an dem Flügel angebracht ist, wobei der zweite Haltearm durch den Antriebsmotor (418) hin- und herbewegt wird.

7. Pipeline-Behandlungsvorrichtung nach Anspruch 1, **dadurch gekennzeichnet,** daß an dem ersten Haltearm zwei Düsen (382) angebracht sind und an dem zweiten Haltearm drei Düsen (382) angebracht sind.

## Revendications

1. Appareil de traitement de pipeline (350) pour traiter un pipeline (12) comportant un châssis principal (352), une première aile (354) montée de manière pivotante sur le châssis principal au niveau d'une première extrémité sur un premier côté du châssis principal, la première aile (354) s'étendant sur à peu près une moitié de la circonférence du pipeline et une seconde aile (356) étant montée de manière pivotante sur le châssis principal au niveau d'une extrémité, sur un second côté du châssis principal (352), la seconde aile (356) s'étendant à peu près sur l'autre moitié de la circonférence du pipeline (12),
caractérisé en ce que l'appareil comporte de plus au moins un support (390, 392) monté sur chacune desdites ailes (354, 356) pour avoir un mouvement en arc de cercle le long de l'aile, une buse (382) montée sur chacun desdits supports (390, 392) en étant située en vis-à-vis de la surface extérieure du pipeline, et des moyens (418, 424, 434, 444) montés sur chaque aile pour faire osciller le support (390, 392) sur cette aile sur une distance prédéterminée en arc de cercle autour de la circonférence du pipeline (12) pour traiter la surface extérieure du pipeline.

2. Appareil de traitement de pipeline selon la revendication 1, caractérisé en ce que le châssis principal (352) comporte un ensemble d'entraînement (362) pour déplacer le châssis principal le long du pipeline,
la première aile (354) est montée de manière pivotante sur le châssis principal (352) pour avoir un mouvement pivotant entre une première position recouvrant une partie de la surface extérieure du pipeline et une seconde position espacée de la surface extérieure du pipeline,
la seconde aile (356) est montée de manière pivotante sur le châssis principal (352) pour avoir un mouvement pivotant entre une première position recouvrant une partie de la surface extérieure du pipeline et une seconde position espacée de la surface extérieure du pipeline, le châssis principal et la première et la seconde aile définissant une chambre de soufflage annulaire (383) autour d'une longueur de la surface extérieure du pipeline lorsque les ailes sont dans la première position,
chaque aile (354, 356) a un anneau avant (384) et un anneau arrière (386, 388) et au moins un support (390, 392) monté entre lesdits anneaux pour avoir un mouvement en arc de cercle dans un plan perpendiculaire à la ligne centrale du pipeline, au moins une buse (382) étant montée sur le support,
un mécanisme d'entraînement (418) est monté sur chaque aile pour faire osciller le support (390, 392) et la buse (382) sur une distance prédéterminée en arc de cercle autour de la circonférence du pipeline.

3. Appareil de traitement de pipeline selon la revendication 1, caractérisé en ce qu'il comporte un support de serrage de buse (446) monté sur le support (390, 392), le support de serrage de buse définissant une ouverture (448) destinée à recevoir la buse (382) entre un premier bras de serrage (450) et un second bras de serrage (452), un dispositif d'application de force pour déformer les bras de serrage pour serrer la buse dans l'ouverture, la ligne centrale (454) de l'ouverture étant orientée pour diriger la décharge de la buse selon un angle voulu par rapport à la surface extérieure du pipeline, la buse pouvant être ajustée le long de la ligne centrale en positionnant la buse comme voulu et en serrant la buse en position dans celle-ci.

4. Appareil de traitement de pipeline selon la revendication 2, caractérisé en ce que le mécanisme d'entraînement (418) comporte un rouleau d'entraînement (372) venant en contact avec la surface extérieure du pipeline et au moins une roue montée folle (378, 380) destinée à venir en contact avec la surface extérieure du pipeline, l'ensemble d'entraînement et la roue montée folle étant chacun monté sur un support (460, 464) ayant une structure destinée au montage de l'ensemble d'entraînement et d'une roue montée folle à divers emplacements le long d'une ligne radiale s'étendant à partir de la ligne centrale du pipeline pour permettre au dispositif d'être utilisé avec une plage de diamètres de pipeline.

5. Appareil de traitement de pipeline selon la revendication 1, caractérisé en ce que les moyens oscillants comportent un moteur (418) mettant en rotation un engrenage d'entraînement (424), un entraînement par chaîne ayant un premier engrenage (434, 436), un second engrenage (438, 439), et une chaîne (440, 441) en prise avec lesdits premier et second engrenages, l'engrenage d'entraînement mettant en rotation ledit premier engrenage, la chaîne ayant un maillon muni d'un ergot (444) s'étendant à partir de celui-ci, l'ergot étant en prise avec le support, une rotation de l'engrenage d'entraînement induisant une rotation desdits premier et second engrenages et le déplacement de la chaîne dans une direction continue, l'ergot provoquant l'oscillation de l'étrier.

6. Appareil de traitement de pipeline selon la revendication 5, caractérisé en ce qu'il comporte un second support monté sur l'aile, le second support étant mis à osciller par le moteur d'entraînement (418).

7. Appareil de traitement de pipeline selon la revendication 1, caractérisé en ce que le premier support supporte deux buses (382) et le second support supporte trois buses (382).
